# EUROPEAN PATENT APPLICATION

(11) **EP 4 576 271 A1**
(43) Date of publication of application: **25.06.2025**
(21) Application number: 24809201.7
(22) Date of filing: 15.10.2024
(51) Int. Cl.: H01M 4/62, H01M 4/36, H01M 4/525, H01M 10/0525, H01M 10/42, H01M 4/131

(54) **COATED POSITIVE ELECTRODE MATERIAL AND PREPARATION METHOD THEREFOR, POSITIVE ELECTRODE SHEET AND SECONDARY BATTERY**

(30) Priority: 17.10.2023 CN 202311343444
(71) Applicant: Tianjin B&M Science And Technology Co., Ltd., Tianjin 300384 (CN)
(72) Inventor: TANG, Miao, Tianjin 300384 (CN); LI, Honglei, Tianjin 300384 (CN); JI, Changyin, Tianjin 300384 (CN); LV, Fei, Tianjin 300384 (CN)
(74) Representative: Meroni, Francesca
(86) International application number: PCT/CN2024/125061
(87) International publication number: WO 2025/082364

(57) **Abstract**

The present invention provides a coated cathode material and a preparation method therefor, a cathode plate and a secondary battery. The coated cathode material includes an inner core and a coating layer coated on at least part of an outer surface of the inner core, wherein the inner core contains a lithium nickel oxide, the coating layer contains a lithium-containing amorphous polymer, and LiPO₂F₂ and metal fluoride are distributed in the lithium-containing amorphous polymer. The metal fluoride can reduce interface side reactions and prevent HF from corroding the cathode material, the lithium-containing amorphous polymer and the metal fluoride with good stability distributed therein are conducive to avoiding direct contact between the inner core and the organic electrolytic solution, and alleviating the electrode/electrolyte interface side reactions and impedance increase during cycling. The lithium-containing amorphous polymer has a good lithium ion transport capability, LiPO₂F₂ can form a low-impedance electrode/electrolyte interface film with high ionic conductivity and electrochemical stability, and a synergistic effect of the two improves kinetic performance of the cathode material.

## Description

### CROSS-REFERENCE TO RELATED APPLICATION

The present application claims the priority to the Chinese patent application with the filing No. 202311343444.0 filed with the China National Intellectual Property Administration on October 17, 2023, and entitled "COATED CATHODE MATERIAL AND PREPARATION METHOD THEREFOR, CATHODE PLATE AND SECONDARY BATTERY", the contents of which are incorporated herein by reference in entirety.

### TECHNICAL FIELD

The present invention relates to the technical field of lithium-ion batteries, and particularly to a coated cathode material and a preparation method therefor, a cathode plate and a secondary battery.

### BACKGROUND ART

The rapid development of new energy automobiles imposes higher requirements on the energy density of lithium secondary batteries, and it has currently become an important task to search for a cathode material with a low cost and a high energy density to meet requirements of power batteries. A lithium nickel oxide layered cathode material, due to advantages such as high gram capacity, excellent cycle performance and low production cost, can achieve a single charging mileage of an electric vehicle of 300 km or more, and has received wide concerns on the market. However, the lithium nickel oxide layered cathode material usually faces a problem of a complex electrode/electrolytic solution interface and a safety problem during practical application.

In the related art, a coating layer is usually formed on a surface of the lithium nickel oxide layered cathode material so as to solve the problem of electrode/electrolytic solution interface and the safety problem, but a problem of increased interface impedance of the layered cathode material also may be caused.

### SUMMARY

Based on this, it is necessary to provide a coated cathode material and a preparation method therefor, a cathode plate and a secondary battery, so as to reduce the interface impedance of the cathode material while solving the problem of the electrode/electrolytic solution interface and the safety problem.

In the first aspect, the present invention provides a coated cathode material, including:
an inner core, where the inner core contains a lithium nickel oxide; and
a coating layer, coated on at least part of an outer surface of the inner core, where the coating layer contains a lithium-containing amorphous polymer, and LiPO₂F₂ and metal fluoride are distributed in the lithium-containing amorphous polymer.

In some embodiments, the lithium-containing amorphous polymer includes a lithium-containing ether oligomer.

Optionally, the lithium-containing ether oligomer has at least one of the following characteristics:
(1) the lithium-containing ether oligomer includes an ether oligomer with a terminal group containing lithium;
(2) a repeating unit of the lithium-containing ether oligomer includes one or more of - CH₂-O-, -CH₂-CH₂-O-, and -CH₂-CH₂-CH₂-O-;
(3) a mass of the lithium-containing ether oligomer accounts for 0.05%-3% of a mass of the inner core; and
(4) a degree of polymerization of the lithium-containing ether oligomer is an integer between 1 and 10.

In some embodiments, the LiPO₂F₂ has at least one of the following characteristics:
(1) an average particle size D50 of the LiPO₂F₂ is 1 nm-100 nm; and
(2) a mass of the LiPO₂F₂ accounts for 0.01%-3% of the mass of the inner core.

In some embodiments, the metal fluoride has at least one of the following characteristics:
(1) a metal element contained in the metal fluoride includes one or more of Li, Mg, Zn, Al, Zr, Ti, Nb, V, Mo and W;
(2) an average particle size D50 of the metal fluoride is 1 nm-100 nm; and
(3) a mass of the metal fluoride accounts for 0.05%-3% of the mass of the inner core.

In some embodiments, in the lithium nickel oxide, a molar ratio of nickel element in the total of metal elements except lithium element is 0.6-1.

Optionally, a chemical formula of the lithium nickel oxide is LiₐNi_{b}M_{1-b}O₂, where M element is a metal element, 0.9≤a≤1.1, and 0.6≤b≤1.

Further optionally, the M element includes one or more of Mn, Co, Al, Mg, Sr, B, Ti, Zr, Nb, Ta and W.

In some embodiments, the coated cathode material has at least one of the following characteristics:
(1) a thickness of the coating layer is 2 nm-200 nm;
(2) an average particle size D50 of the coated cathode material is 2 µm-18 µm;
(3) a specific surface area of the coated cathode material is 0.3 m²/g-3.0 m²/g;
(4) a water content of the coated cathode material is <500 ppm; and
(5) the coated cathode material contains one or more of free LiOH and free Li₂CO₃.

Optionally, a content of the free LiOH in the coated cathode material is 1,500 ppm-4,000 ppm.

Optionally, a content of the free Li₂CO₃ in the coated cathode material is 1,500 ppm-4,000 ppm.

In the second aspect, the present invention provides a preparation method for a coated cathode material according to the first aspect of the present invention, including steps as follows:
mixing the inner core, a reaction medium and a LiPF₆-containing carbonate solution, and then performing an aging reaction so as to form the coating layer on at least part of an outer surface of the inner core, thus rendering the coated cathode material, where the inner core contains at least one of free LiOH and free Li₂CO₃,
wherein the reaction medium includes a metal oxide; and a water content of the carbonate solution is <500 ppm.

In some embodiments, the preparation method for a coated cathode material includes at least one of the following conditions:
(1) a content of the free LiOH in the inner core is 2,000 ppm-10,000 ppm;
(2) a content of the free Li₂CO₃ in the inner core is 2,000 ppm-10,000 ppm;
(3) a water content of the inner core is <500 ppm;
(4) a metal element contained in the metal oxide includes one or more of Mg, Zn, Al, Zr, Ti, Nb, V, Mo and W;
(5) a mass ratio of the inner core to the reaction medium is 1:(0.0005-0.03);
(6) a specific surface area of the reaction medium is 10 m²/g-100 m²/g;
(7) the reaction medium includes elementary particles having an average particle size D50 of 1 nm-500 nm;
(8) mass percentage concentration of the LiPF₆ in the carbonate solution is 5%-20%;
(9) a carbonate solvent contained in the carbonate solution includes one or more of ethylene carbonate, propylene carbonate, dimethyl carbonate, diethyl carbonate and ethyl methyl carbonate;
(10) a temperature of the aging reaction is 20 °C-80 °C; and a duration of the aging reaction is 6 h-30 h; and
(11) a solid content of a slurry after mixing the inner core, the reaction medium and the carbonate solution is 10%-80%.

In the third aspect, the present invention provides a cathode plate, including the coated cathode material according to the first aspect of the present invention or the coated cathode material prepared using the method according to the second aspect of the present invention.

In the fourth aspect, the present invention provides a secondary battery, including the cathode plate according to the third aspect of the present invention.

In the fifth aspect, the present invention provides an electric device, including the secondary battery according to the fourth aspect of the present invention.

In the coated cathode material and the preparation method therefor, the cathode plate and the secondary battery provided in the above, the coated cathode material includes a coating layer containing a lithium-containing amorphous polymer, wherein a lithium salt LiPO₂F₂ and a metal fluoride are distributed in the lithium-containing amorphous polymer, and the coating layer has a CEI-like film structure, that is, the lithium-containing amorphous polymer and the lithium salt LiPO₂F₂ and the metal fluoride distributed therein constitute an organic/inorganic composite structure; the metal fluoride can reduce interface side reactions and prevent HF in the electrolytic solution from corroding the cathode material; therefore the lithium-containing amorphous polymer and the metal fluoride with good stability distributed therein are conducive to avoiding direct contact between the inner core and the organic electrolytic solution, and alleviating the electrode/electrolyte interface side reactions and impedance increase during cycling. In addition, the lithium-containing amorphous polymer has a good lithium ion transport capability, LiPO₂F₂ can form a low-impedance electrode/electrolyte interface film with high ionic conductivity and electrochemical stability, and a synergistic effect of the two improves kinetic performance of the cathode material, and meanwhile can also improve long cycle stability of the cathode material.

### BRIEF DESCRIPTION OF DRAWINGS

FIG. 1 is an SEM scanning electron micrograph of a coated cathode material prepared in Example 1;
FIG. 2 is a MALDI-TOF-MS spectrum of the coated cathode material prepared in Example 1; and
FIG. 3 is a schematic graph of test results of rate performance of Example 1 and Comparative Examples 1-5.

### DETAILED DESCRIPTION OF EMBODIMENTS

In order to facilitate understanding the present invention, the present invention will be described more fully hereinafter with reference to relevant drawings. Preferred examples of the present invention are given in the drawings. However, the present invention may be implemented in many varied forms, but not limited to the examples described herein. In contrast, these examples are provided for the purpose of making the contents disclosed in the present invention more thorough and more comprehensive.

Unless otherwise defined, all of the technical and scientific terms used herein have the same meanings as those generally understood by the skilled in the art of the present invention. The terms used herein in the description of the present invention are only for the purpose of describing specific examples, and are not intended to limit the present invention. The term "and/or" used herein includes any and all combinations of one or more related items listed.

In the present invention, the technical features described in an open manner include a closed technical solution composed of the listed features, as well as an open technical solution containing the listed features.

In the present invention, for a numerical interval involved, unless specially indicated, the numerical interval is considered continuous, and includes the minimum and maximum values of the range, as well as each value between such minimum and maximum values. Further, when a range refers to integers, each integer between the minimum and maximum values of the range is included. Furthermore, when a number of ranges are provided to describe a feature(s) or a characteristic(s), the ranges may be combined. In other words, unless otherwise indicated, all ranges disclosed herein are to be understood to include any and all subranges subsumed therein.

Only some numerical ranges are specifically disclosed herein. However, any lower limit can be combined with any upper limit to form ranges that are not explicitly described; and any lower limit can be combined with other lower limits to form ranges that are not explicitly described, and likewise, any upper limit can be combined with any other upper limits to form ranges that are not explicitly described. Besides, each separately disclosed point or individual numerical value can itself be combined, as a lower limit or an upper limit, with any other points or individual numerical value or with other lower limits or upper limits to form ranges that are not explicitly described.

Temperature parameters in the present invention, unless particularly limited, allow both a constant temperature treatment and a treatment within a certain temperature interval. The constant temperature treatment allows the temperature to fluctuate within an instrument-controlled accuracy range.

In the description of the invention, "multiple (a plurality of)" means at least two, for example, two, three, etc., unless otherwise expressly defined.

If without special illustration, all the embodiments and optional embodiments of the present invention can be combined with each other to form new technical solutions. If without special illustration, all the technical features and optional technical features of the present invention can be combined with each other to form new technical solutions.

If without special illustration, all the steps of the present invention can be carried out in order, or randomly, preferably in order.

The lithium nickel oxide layered cathode material usually faces the problem of the complex electrode/electrolytic solution interface and the safety problem during practical application. The skilled in the art analyze the reason is mainly that more residual lithium compounds such as LiOH and Li₂CO₃ on a surface of the lithium nickel oxide layered cathode material are prone to aggravation of electrode slurry gelation and gas generation of battery; moreover, in a highly charged state of the lithium nickel oxide layered cathode material, side reactions between high-activity Ni⁴⁺ and a liquid electrolyte can induce decomposition of an organic solvent of the electrolytic solution, so as to form an unstable cathode/electrolyte interface layer (CEI film), thus accelerating battery failure.

In the related art, a coating layer is usually formed on a surface of the lithium nickel oxide layered cathode material to inhibit the interface side reactions, so as to solve the problem of the electrode/electrolytic solution interface and the safety problem. However, electrons/ions are insulated, and the coating layer with a heavy mass may also cause problems such as increased impedance and reduced specific capacity of the material. Therefore, it is urgent to optimize a coating modification process of the lithium nickel oxide layered cathode material, which not only ensures high stability, integrity and uniformity of the coating layer, and minimizes the interface side reactions, but also reduces damage to a material surface structure by the modification process, so as to realize a self-limiting coating reaction.

Based on the above problems, the present invention provides a coated cathode material and a preparation method therefor. A lithium nickel oxide layered cathode material is used as an inner core, and based on residual lithium compounds such as LiOH and Li₂CO₃ on a surface of the inner core, a coating layer of a lithium-containing amorphous polymer is generated outside the inner core through a self-limiting polymerization reaction, wherein a lithium salt LiPO₂F₂ and a metal fluoride are distributed in the lithium-containing amorphous polymer. By forming the coating layer having the above characteristics, the electrode/electrolyte interface side reactions and the impedance increase during cycling can be alleviated, and at the same time, the kinetic performance of the cathode material is improved.

In the first aspect, the present invention provides a coated cathode material, including an inner core and a coating layer coated on at least part of an outer surface of the inner core, where the inner core contains a lithium nickel oxide, the coating layer contains a lithium-containing amorphous polymer, and LiPO₂F₂ and a metal fluoride are distributed in the lithium-containing amorphous polymer.

It can be understood that the coated cathode material includes a coating layer containing a lithium-containing amorphous polymer, where a lithium salt LiPO₂F₂ and a metal fluoride are distributed in the lithium-containing amorphous polymer, and the coating layer has a CEI-like film structure, that is, the lithium-containing amorphous polymer and the lithium salt LiPO₂F₂ and the metal fluoride distributed therein constitute an organic/inorganic composite structure; the metal fluoride can reduce interface side reactions and prevent HF in the electrolytic solution from corroding the cathode material; therefore the lithium-containing amorphous polymer and the metal fluoride with good stability distributed therein are conducive to avoiding direct contact between the inner core and the organic electrolytic solution, and alleviating the electrode/electrolyte interface side reactions and impedance increase during cycling. In addition, the lithium-containing amorphous polymer has a good lithium ion transport capability, LiPO₂F₂ can form a low-impedance electrode/electrolyte interface film with high ionic conductivity and electrochemical stability, and a synergistic effect of the two improves kinetic performance of the cathode material, and meanwhile can also improve long cycle stability of the cathode material.

In some embodiments, the lithium-containing amorphous polymer includes a lithium-containing ether oligomer.

In some optional embodiments, the lithium-containing ether oligomer includes an ether oligomer with a terminal group containing lithium, wherein lithium ion in the terminal group are conducive to reducing a transport energy barrier of the lithium ion at an interface and reducing the interface impedance.

In some optional embodiments, a repeating unit of the lithium-containing ether oligomer includes one or more of -CH₂-O-, -CH₂-CH₂-O-, and -CH₂-CH₂-CH₂-O-.

In some optional embodiments, a mass of the lithium-containing ether oligomer accounts for 0.05%-3% of a mass of the inner core, which may be, for example, but not limited to, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3% or a range between any two numerical values above. When the percentage of the mass of the lithium-containing ether oligomer in the mass of the inner core is within the above range, it is conducive to improving integrity of the coating layer and stability of the interface between an electrode material and the electrolyte.

In some optional embodiments, a degree of polymerization of the lithium-containing ether oligomer is an integer between 1 and 10, and may be, for example, 1, 2, 3, 4, 5, 6, 7, 8, 9, or 10, which is not specifically limited.

In some optional embodiments, an average particle size D50 of LiPO₂F₂ is 1 nm-100 nm, which may be, for example, but not limited to, 1 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm or a range between any two numerical values above. When the average particle size D50 of LiPO₂F₂ is within the above range, it is conducive to improving electrochemical activity of LiPO₂F₂ and realizing uniform distribution of LiPO₂F₂ in the lithium-containing ether oligomer.

As a possible embodiment, a mass of LiPO₂F₂ accounts for 0.01%-3% of the mass of the inner core, which may be, for example, but not limited to, 0.01%, 0.02%, 0.03%, 0.04%, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3% or a range between any two numerical values above. When the percentage of the mass of LiPO₂F₂ in the mass of the inner core is within the above range, it is beneficial to reduce the interface impedance of the battery and improve the cycle performance of the battery.

In some optional embodiments, a metal element contained in the metal fluoride includes one or more of Li, Mg, Zn, Al, Zr, Ti, Nb, V, Mo and W. The metal fluoride containing the above metal elements is conducive to inducing decomposition of LiPF₆, and metal fluoride and lithium salt LiPO₂F₂ are generated.

In some optional embodiments, an average particle size D50 of the metal fluoride is 1 nm-100 nm, which may be, for example, but not limited to, 1 nm, 5 nm, 10 nm, 15 nm, 20 nm, 25 nm, 30 nm, 35 nm, 40 nm, 45 nm, 50 nm, 55 nm, 60 nm, 65 nm, 70 nm, 75 nm, 80 nm, 85 nm, 90 nm, 95 nm, 100 nm or a range between any two numerical values above. When the average particle size D50 of the metal fluoride is within the above range, it is conducive to realizing uniform distribution of the metal fluoride in the lithium-containing ether oligomer.

As a possible embodiment, a mass of the metal fluoride accounts for 0.05%-3% of the mass of the inner core, which may be, for example, but not limited to, 0.05%, 0.06%, 0.07%, 0.08%, 0.09%, 0.1%, 0.2%, 0.3%, 0.4%, 0.5%, 0.6%, 0.7%, 0.8%, 0.9%, 1%, 1.1%, 1.2%, 1.3%, 1.4%, 1.5%, 1.6%, 1.7%, 1.8%, 1.9%, 2%, 2.1%, 2.2%, 2.3%, 2.4%, 2.5%, 2.6%, 2.7%, 2.8%, 2.9%, 3% or a range between any two numerical values above. When the percentage of the mass of the metal fluoride in the mass of the inner core is within the above range, it is conducive to realizing the uniform distribution of the metal fluoride in the lithium-containing ether oligomer and improving the interface stability.

In some embodiments, in the lithium nickel oxide, a molar ratio of nickel element in the total of metal elements except lithium element is 0.6-1, which may be, for example, but not limited to, 0.6, 0.65, 0.7, 0.75, 0.8, 0.85, 0.9, 0.95, 1 or a range between any two numerical values above.

In some optional embodiments, a chemical formula of the lithium nickel oxide is LiₐNi_{b}M_{1-b}O₂, where M element is a metal element, 0.9≤a≤1.1, and 0.6≤b≤1.

As a possible embodiment, the M element includes one or more of Mn, Co, Al, Mg, Sr, B, Ti, Zr, Nb, Ta and W.

In some embodiments, a thickness of the coating layer is 2 nm-200 nm, which may be, for example, but not limited to, 2 nm, 5 nm, 10 nm, 20 nm, 30 nm, 40 nm, 50 nm, 60 nm, 70 nm, 80 nm, 90 nm, 100 nm, 110 nm, 120 nm, 130 nm, 140 nm, 150 nm, 160 nm, 170 nm, 180 nm, 190 nm, 200nm or a range between any two numerical values above. When the thickness of the coating layer is within the above range, it is conducive to improving the stability of the interface between the electrode material and the electrolyte.

As a possible embodiment, an average particle size D50 of the coated cathode material is 2 µm-18 µm, which may be, for example, but not limited to, 2 µm, 3 µm, 4 µm, 5 µm, 6 µm, 7 µm, 8 µm, 9 µm, 10 µm, 11 µm, 12 µm, 13 µm, 14 µm, 15 µm, 16 µm, 17 µm, 18µm or a range between any two numerical values above. When the average particle size D50 of the coated cathode material is within the above range, it can be beneficial for the cathode material to have relatively high electrochemical activity and high compaction density.

In some optional embodiments, a specific surface area of the coated cathode material is 0.3 m²/g-3.0 m²/g, which may be, for example, but not limited to, 0.3 m²/g, 0.4 m²/g, 0.5 m²/g, 0.6 m²/g, 0.7 m²/g, 0.8 m²/g, 0.9 m²/g, 1 m²/g, 1.1 m²/g, 1.2 m²/g, 1.3 m²/g, 1.4 m²/g, 1.5 m²/g, 1.6 m²/g, 1.7 m²/g, 1.8 m²/g, 1.9 m²/g, 2 m²/g, 2.1 m²/g, 2.2 m²/g, 2.3 m²/g, 2.4 m²/g, 2.5 m²/g, 2.6 m²/g, 2.7 m²/g, 2.8 m²/g, 2.9 m²/g, 3 m²/g or a range between any two numerical values above. When the specific surface area of the coated cathode material is within the above range, it can be beneficial for the cathode material to have relatively high electrochemical activity.

In some embodiments, a water content of the coated cathode material is <500 ppm.

In some embodiments, the coated cathode material contains a free lithium-containing compound.

In some optional embodiments, the free lithium-containing compound includes one or more of free LiOH and free Li₂CO₃.

It should be noted that the inner core is secondary particles formed by agglomeration of a plurality of primary particles. The "free LiOH" and "free Li₂CO₃" mentioned above are both residual lithium compounds which do not completely react and exist on a surface of the coated cathode material or between the primary particles of the inner core.

Optionally, a content of the free LiOH in the coated cathode material is 1,500 ppm-4,000 ppm, which may be, for example, but not limited to, 1,500 ppm, 1,600 ppm, 1,700 ppm, 1,800 ppm, 1,900 ppm, 2,000 ppm, 2,100 ppm, 2,200 ppm, 2,300 ppm, 2,400 ppm, 2,500 ppm, 2,600 ppm, 2,700 ppm, 2,800 ppm, 2,900 ppm, 3,000 ppm, 3,100 ppm, 3,200 ppm, 3,300 ppm, 3,400 ppm, 3,500 ppm, 3,600 ppm, 3,700 ppm, 3,800 ppm, 3,900 ppm, 4,000 ppm or a range between any two numerical values above. When the content of the free LiOH in the coated cathode material is within the above range, processability of the cathode material can be improved.

Optionally, a content of the free Li₂CO₃ in the coated cathode material is 1,500 ppm-4,000 ppm, which may be, for example, but not limited to, 1,500 ppm, 1,600 ppm, 1,700 ppm, 1,800 ppm, 1,900 ppm, 2,000 ppm, 2,100 ppm, 2,200 ppm, 2,300 ppm, 2,400 ppm, 2,500 ppm, 2,600 ppm, 2,700 ppm, 2,800 ppm, 2,900 ppm, 3,000 ppm, 3,100 ppm, 3,200 ppm, 3,300 ppm, 3,400 ppm, 3,500 ppm, 3,600 ppm, 3,700 ppm, 3,800 ppm, 3,900 ppm, 4,000 ppm or a range between any two numerical values above. When the content of the free Li₂CO₃ in the coated cathode material is within the above range, processability of the cathode material can be improved, and the gas generation of the battery can be reduced.

In the second aspect, the present invention provides a preparation method for the coated cathode material according to the first aspect, including following steps: mixing an inner core, a reaction medium and a LiPF₆-containing carbonate solution, and then performing an aging reaction so as to form a coating layer on at least part of an outer surface of the inner core, thus rendering the coated cathode material, wherein the inner core contains at least one of free LiOH and free Li₂CO₃.

The coating layer is formed on the surface of the inner core through self-limiting polymerization reaction, and the coating layer has excellent coating integrity, uniformity and mechanical stability.

It should be noted that the self-limiting polymerization reaction induces cleavage of ester bonds in a carbonate solvent using free lithium compounds (LiOH and Li₂CO₃) in the inner core, and a degree of polymerization reaction progress for generating the coating layer is controlled by a free lithium content.

The free LiOH and free Li₂CO₃ contained in the inner core can induce cleavage of ester bonds in the carbonate solvent, and carbonate undergoes self-limiting polymerization in situ, so as to render a lithium-containing amorphous polymer coating layer. Taking an ethylene carbonate solvent as an example, a reaction process of generating the ether oligomer is as follows:

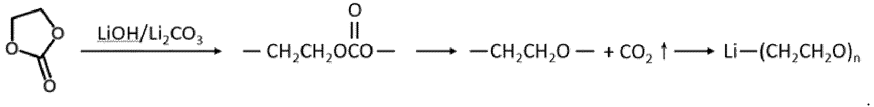

The reaction medium can induce decomposition of LiPF₆, and metal fluoride and lithium salt LiPO₂F₂ are generated and embedded in the ether oligomer coating layer.

It should be noted that the inner core is secondary particles formed by agglomeration of a plurality of primary particles. The "free LiOH" and "free Li₂CO₃" mentioned above are both residual lithium compounds which do not completely react and exist on a surface of the inner core or between the primary particles of the inner core.

In some embodiments, a content of the free LiOH in the inner core is 2,000 ppm-10,000 ppm, which may be, for example, but not limited to, 2,000 ppm, 2,500 ppm, 3,000 ppm, 3,500 ppm, 4,000 ppm, 4,500 ppm, 5,000 ppm, 5,500 ppm, 6,000 ppm, 6,500 ppm, 7,000 ppm, 7,500 ppm, 8,000 ppm, 8,500 ppm, 9,000 ppm, 9,500 ppm, 10,000 ppm or a range between any two numerical values above. When the content of the free LiOH in the inner core is within the above range, it is more beneficial to in-situ self-limiting polymerization of the carbonate solvent, and improvement on uniformity and integrity of the coating layer.

In some embodiments, a content of the free Li₂CO₃ in the inner core is 2,000 ppm-10,000 ppm, which may be, for example, but not limited to, 2,000 ppm, 2,500 ppm, 3,000 ppm, 3,500 ppm, 4,000 ppm, 4,500 ppm, 5,000 ppm, 5,500 ppm, 6,000 ppm, 6,500 ppm, 7,000 ppm, 7,500 ppm, 8,000 ppm, 8,500 ppm, 9,000 ppm, 9,500 ppm, 10,000 ppm or a range between any two numerical values above. When the content of the free Li₂CO₃ in the inner core is within the above range, it is more beneficial to in-situ self-limiting polymerization of the carbonate solvent, and improvement on uniformity and integrity of the coating layer.

In some embodiments, a water content of the inner core is <500 ppm, which is conducive to reducing hydrolysis side reaction of LiPF₆, and avoiding generation of HF and corrosion of HF to the cathode material.

As a possible embodiment, the reaction medium includes a metal oxide, and a metal element contained in the metal oxide includes one or more of Mg, Zn, Al, Zr, Ti, Nb, V, Mo and W. Taking MgO as an example, a reaction equation thereof with LiPF₆ in the carbonate solution is as follows:

2MgO + LiPF₆ → 2MgF₂ + LiPO₂F₂.

In some optional embodiments, a mass ratio of the inner core to the reaction medium is 1:(0.0005-0.03), which may be, for example, but not limited to, 1:0.0005, 1:0.001, 1:0.002, 1:0.003, 1:0.004, 1:0.005, 1:0.006, 1:0.007, 1:0.008, 1:0.009, 1:0.01, 1:0.011, 1:0.012, 1:0.013, 1:0.014, 1:0.015, 1:0.016, 1:0.017, 1:0.018, 1:0.019, 1:0.02, 1:0.021, 1:0.022, 1:0.023, 1:0.024, 1:0.025, 1:0.026, 1:0.027, 1:0.028, 1:0.029, 1:0.03 or a range between any two ratios above. When the mass ratio of the inner core to the reaction medium is within the above range, reactant residues can be reduced, which is beneficial to a reaction product to meet defined requirements.

In some embodiments, a specific surface area of the reaction medium is 10 m²/g-100 m²/g, which may be, for example, but not limited to, 10 m²/g, 15 m²/g, 20 m²/g, 25 m²/g, 30 m²/g, 35 m²/g, 40 m²/g, 45 m²/g, 50 m²/g, 55 m²/g, 60 m²/g, 65 m²/g, 70 m²/g, 75 m²/g, 80 m²/g, 85 m²/g, 90 m²/g, 95 m²/g, 100 m²/g or a range between any two numerical values above. When the specific surface area of the reaction medium is within the above range, it is conducive to improving chemical activity of the reaction medium, accelerating a reaction rate, and meanwhile facilitating a product to meet defined requirements.

As a possible embodiment, the reaction medium includes elementary particles having an average particle size D50 of 1 nm-500 nm. For example, the average particle size D50 of the elementary particles included in the reaction medium may be, but is not limited to, 1 nm, 30 nm, 50 nm, 80 nm, 100 nm, 130 nm, 150 nm, 180 nm, 200 nm, 230 nm, 250 nm, 280 nm, 300 nm, 330 nm, 350 nm, 380 nm, 400 nm, 430 nm, 450 nm, 480 nm, 500 nm or a range between any two numerical values above. When the average particle size D50 of the elementary particles included in the reaction medium is within the above range, it is conducive to improving chemical activity of the reaction medium, accelerating a reaction rate, and meanwhile facilitating a product to meet defined requirements.

It should be noted that the "elementary particle" mentioned above refers to primary particle, that is, the reaction medium includes primary particles having the average particle size D50 of 1 nm-500 nm.

In some embodiments, mass percentage concentration of LiPF₆ in the carbonate solution is 5%-20%, which may be, for example, but not limited to, 5%, 6%, 7%, 8%, 9%, 10%, 11%, 12%, 13%, 14%, 15%, 16%, 17%, 18%, 19%, 20% or a range between any two numerical values above. When the mass percentage concentration of LiPF₆ in the carbonate solution is within the above range, reactant residues can be reduced, and a reaction product can satisfy defined requirements.

In some embodiments, the carbonate solvent contained in the carbonate solution includes one or more of ethylene carbonate, propylene carbonate, dimethyl carbonate, diethyl carbonate and ethyl methyl carbonate.

As a possible embodiment, a water content of the carbonate solution is <500 ppm. When the water content of the carbonate solution is higher than the above range, a copolymerization process is affected, side reactions occur, and a polymerization effect is poor. Moreover, a too high water content causes hydrolysis of LiPF₆ solute to generate HF, leading to a high content of metal fluoride on the surface of the material.

In some embodiments, a temperature of the aging reaction is 20 °C-80 °C, which may be, for example, but not limited to, 20 °C, 25 °C, 30 °C, 35 °C, 40 °C, 45 °C, 50 °C, 55 °C, 60 °C, 65 °C, 70 °C, 75 °C, 80 °C or a range between any two numerical values above. When the temperature of the aging reaction is within the above range, it is beneficial to polymerization reaction of the carbonate. A duration of the aging reaction is 6 h-30 h, which may be, for example, but not limited to, 6 h, 8 h, 10 h, 12 h, 15 h, 17 h, 20 h, 22 h, 25 h, 27 h, 30 h or a range between any two numerical values above.

In some embodiments, a solid content of a slurry after mixing the inner core, the reaction medium and the carbonate solution is 10%-80%, which may be, for example, but not limited to, 10%, 20%, 30%, 40%, 50%, 60%, 70%, 80% or a range between any two numerical values above.

In some embodiments, the preparation method for the coated cathode material further includes: performing a suction filtration treatment on a reaction liquid after the aging reaction, performing a drying treatment on a solid material having undergone the suction filtration treatment, and cooling and sieving, to render the coated cathode material.

In some optional embodiments, the solid material having undergone the suction filtration treatment is dried by means of vibration drying in a vacuum condition.

Optionally, a temperature of the vibration drying is 80 °C-300 °C, which may be, for example, but not limited to, 80 °C, 90 °C, 100 °C, 110 °C, 120 °C, 130 °C, 140 °C, 150 °C, 160 °C, 170 °C, 180 °C, 190 °C, 200 °C, 210 °C, 220 °C, 230 °C, 240 °C, 250 °C, 260 °C, 270 °C, 280 °C, 290 °C, 300 °C or a range between any two numerical values above. A duration of the vibration drying is 5 h-20 h, which may be, for example, but not limited to, 5 h, 6 h, 7 h, 8 h, 9 h, 10 h, 11 h, 12 h, 13 h, 14 h, 15 h, 16 h, 17 h, 18 h, 19 h, 20 h or a range between any two numerical values above.

In some embodiments, a preparation method for the inner core includes: mixing a precursor and a lithium source, and then performing a roasting treatment, so as to render the inner core, wherein the precursor contains Ni.

In some optional embodiments, the precursor further contains an M element, where the M element includes one or more of Mn, Co, Al, Mg, Sr, B, Ti, Zr, Nb, Ta and W.

In some optional embodiments, the precursor includes at least one of Ni-containing oxide, hydroxide and carbonate, and at least one of M element-containing oxide, hydroxide and carbonate.

In some optional embodiments, a ratio of a molar amount of lithium element contained in the lithium source to a total molar amount of Ni and M elements contained in the precursor is (1-1.15):1, which may be, for example, but not limited to, 1:1, 1.01:1, 1.02:1, 1.03:1, 1.04:1, 1.05:1, 1.06:1, 1.07:1, 1.08:1, 1.09:1, 1.1:1, 1.11:1, 1.12:1, 1.13:1, 1.14:1, 1.15:1 or a range between any two numerical values above.

In some embodiments, a temperature of the roasting treatment is 700 °C-1000 °C, which may be, for example, but not limited to, 700 °C, 750 °C, 800 °C, 850 °C, 900 °C, 950 °C, 1000 °C or a range between any two numerical values above. A duration of the roasting treatment is 8 h-20 h, which may be, for example, but not limited to, 8 h, 9 h, 10 h, 11 h, 12 h, 13 h, 14 h, 15 h, 16 h, 17 h, 18 h, 19 h, 20 h or a range between any two numerical values above. A heating-up rate of the roasting treatment is 1 °C/min-5 °C/min, which may be, for example, but not limited to, 1 °C/min, 2 °C/min, 3 °C/min, 4 °C/min, 5 °C/min or a range between any two numerical values above.

It should be noted that, the heating-up rate mentioned above refers to a rate of raising a temperature of the material itself to a calcination temperature.

In the third aspect, the present invention provides a cathode plate, including the coated cathode material according to the first aspect or the coated cathode material prepared using the method according to the second aspect.

In the fourth aspect, the present invention provides a secondary battery, including the cathode plate according to the third aspect.

The secondary battery of the present invention includes the above coated cathode material, and has excellent kinetic performance and long cycle stability.

In the fifth aspect, the present invention provides an electric device, including the secondary battery according to the fourth aspect. The electric device may be an electric vehicle, an electric bicycle, a two-wheel electric vehicle, a power system of an electric vehicle, an energy storage system, a movable storage device, or the like, which is not specifically limited.

The technical solutions of the present invention will be described in detail below in conjunction with specific examples.

### I. Preparation of cathode material

### Example 1

S1. Preparation of inner core material: 1000 g of Ni_{0.82}Mn_{0.12}Co_{0.06}(OH)₂ (as a precursor), 910.2 g of LiOH·H₂O (as a lithium source), 5.196 g of TiO₂ (as a precursor), and 5.280 g of ZrO₂ (as a precursor) were well mixed, where Li/Me ratio was 1.05 (where Me represents Ni and M elements contained in the precursor). Mixture was then roasted in an oxygen furnace at 820 °C for 12 h at a heating-up rate of 3 °C/min. After the roasting was finished, product was cooled with the furnace, and was pulverized and sieved to render an inner core material Li_{1.022}Ni_{0.812}Mn_{0.119}Co_{0.059}Ti_{0.006}Zr_{0.004}O₂.

S2. Preparation of mixed slurry: 1000 g of the above inner core material was thoroughly mixed well with 5.0 g of reaction medium Al₂O₃, where Al₂O₃ elementary particles used had an average particle size D50 of 50 nm and a specific surface area of 42.4 m²/g. Mixture was then added into 1000 g of a LiPF₆-containing ethylene carbonate solution, where LiPF₆ concentration was 10 wt%, and stirred well, where a water content of the ethylene carbonate solution was 350 ppm. Then aging was performed under a condition of 30 °C for 24 h to render the mixed slurry.

S3. Preparation of coated cathode material: Suction filtration was performed on the above mixed slurry. A filter cake was dried in a vacuum vibration dryer at a drying temperature of 150 °C for 16 h. After cooling, material was sieved by a 325-mesh sieve, so as to render the coated cathode material.

### Example 2

S1. Preparation of inner core material: 1000 g of Ni_{0.90}Co_{0.10}(OH)₂ (as a precursor), 452.5 g of LiOH·H₂O (as a lithium source), 11.000 g of Al₂O₃ (as a precursor), and 12.500 g of WO₃ (as a precursor) were well mixed, where Li/Me ratio was 1.15 (where Me represents Ni and M elements contained in the precursor). Mixture was then roasted in an oxygen furnace at 1000 °C for 8 h at a heating-up rate of 5 °C/min. After the roasting was finished, product was cooled with the furnace, and was pulverized and sieved to render an inner core material Li_{1.056}Ni_{0.878}Co_{0.0970}Al_{0.02}W_{0.005}O₂.

S2. Preparation of mixed slurry: 1000 g of the above inner core material was thoroughly mixed well with 10.0 g of reaction medium Nb₂O₅ and 20.0 g of reaction medium MgO, where Nb₂O₅ elementary particles used had an average particle size D50 of 440 nm and a specific surface area of 10.3 m²/g, and MgO elementary particles had an average particle size D50 of 5.5 nm and a specific surface area of 96.6 m²/g. Mixture was then added into 9000 g of a LiPF₆-containing ethylene carbonate solution, where LiPF₆ concentration was 20 wt%, and stirred well, where a water content of the ethylene carbonate solution was 475 ppm. Then aging was performed under a condition of 20 °C for 30 h to render the mixed slurry.

S3. Preparation of coated cathode material: Suction filtration was performed on the above mixed slurry. A filter cake was dried in a vacuum vibration dryer at a drying temperature of 300 °C for 5 h. After cooling, material was sieved by a 325-mesh sieve, so as to render the coated cathode material.

### Example 3

S1. Preparation of inner core material: 1000 g of Ni_{0.90}Mn_{0.06}Co_{0.04}(OH)₂ (as a precursor), 453.65 g of LiOH·H₂O (as a lithium source), 5.510 g of Al₂O₃ (as a precursor), and 10.545 g of ZrO₂ (as a precursor) were well mixed, where Li/Me ratio was 1.0 (where Me represents Ni and M elements contained in the precursor). Mixture was then roasted in an oxygen furnace at 700 °C for 20 h at a heating-up rate of 1 °C/min. After the roasting was finished, product was cooled with the furnace, and was pulverized and sieved to render an inner core material Li_{0.978}Ni_{0.884}Mn_{0.059}Co_{0.039}Al_{0.01}Zr_{0.008}O₂.

S2. Preparation of mixed slurry: 1000 g of the above inner core material was thoroughly mixed well with 0.5 g of reaction medium ZnO, where ZnO elementary particles used had an average particle size D50 of 15 nm and a specific surface area of 64.3 m²/g. Mixture was then added into 250 g of a LiPF₆-containing ethylene carbonate solution, where LiPF₆ concentration was 5 wt%, and stirred well, where a water content of the ethylene carbonate solution was 320 ppm. Then aging was performed under a condition of 80 °C for 6 h to render the mixed slurry.

S3. Preparation of coated cathode material: Suction filtration was performed on the above mixed slurry. A filter cake was dried in a vacuum vibration dryer at a drying temperature of 80 °C for 20 h. After cooling, material was sieved by a 325-mesh sieve, so as to render the coated cathode material.

### Example 4

S1. Preparation of inner core material: 1000 g of Ni_{0.92}Mn_{0.06}Co_{0.02}(OH)₂ (as a precursor), 475.25 g of LiOH·H₂O (as a lithium source), 4.480 g of SrO (as a precursor), and 2.260 g of B₂O₃ (as a precursor) were well mixed, where Li/Me ratio was 1.10 (where Me represents Ni and M elements contained in the precursor). Mixture was then roasted in an oxygen furnace at 780 °C for 16 h at a heating-up rate of 5 °C/min. After the roasting was finished, product was cooled with the furnace, and was pulverized and sieved to render an inner core material Li_{1.060}Ni_{0.911}Mn_{0.059}Co_{0.02}Sr_{0.004}B_{0.006}O₂.

S2. Preparation of mixed slurry: 1000 g of the above inner core material was thoroughly mixed well with 10.0 g of reaction medium TiO₂ and 10.0 g of reaction medium ZrO₂, where TiO₂ elementary particles used had an average particle size D50 of 25 nm and a specific surface area of 68.5 m²/g, and ZrO₂ elementary particles used had an average particle size D50 of 35 nm and a specific surface area of 46.6 m²/g. Mixture was then added into 1800 g of a LiPF₆-containing dimethyl carbonate solution, where LiPF₆ concentration was 10 wt%, and stirred well, where a water content of the dimethyl carbonate solution was 457 ppm. Then aging was performed under a condition of 35 °C for 30 h to render the mixed slurry.

S3. Preparation of coated cathode material: Suction filtration was performed on the above mixed slurry. A filter cake was dried in a vacuum vibration dryer at a drying temperature of 80 °C for 21 h. After cooling, material was sieved by a 325-mesh sieve, so as to render the coated cathode material.

### Example 5

S1. Preparation of inner core material: 1000 g of Ni_{0.92}Mn_{0.04}Co_{0.04}(OH)₂ (as a precursor), 470.08 g of LiOH·H₂O (as a lithium source), 11.935 g of Ta₂O₅ (as a precursor), and 7.180 g of Nb₂O₅ (as a precursor) were well mixed, where Li/Me ratio was 1.12 (where Me represents Ni and M elements contained in the precursor). Mixture was then roasted in an oxygen furnace at 900 °C for 12 h at a heating-up rate of 5 °C/min. After the roasting was finished, product was cooled with the furnace, and was pulverized and sieved to render an inner core material Li_{1.065}Ni_{0.91}Mn_{0.04}Co_{0.04}Ta_{0.005}Nb_{0.005}O₂.

S2. Preparation of mixed slurry: 1000 g of the above inner core material was thoroughly mixed well with 25 g of reaction medium WO₃, where WO₃ elementary particles used had an average particle size D50 of 45 nm and a specific surface area of 82.5 m²/g. Mixture was then added into 500 g of a LiPF₆-containing dimethyl carbonate solution, where LiPF₆ concentration was 15 wt%, and stirred well, where a water content of the dimethyl carbonate solution was 285 ppm. Then aging was performed under a condition of 50 °C for 18 h to render the mixed slurry.

S3. Preparation of coated cathode material: Suction filtration was performed on the above mixed slurry. A filter cake was dried in a vacuum vibration dryer at a drying temperature of 150 °C for 9 h. After cooling, material was sieved by a 325-mesh sieve, so as to render the coated cathode material.

### Example 6

S1. Preparation of inner core material: 1000 g of Ni_{0.95}Mn_{0.04}Co_{0.01}(OH)₂ (as a precursor), 453.35 g of LiOH·H₂O (as a lithium source) and 5.505 g of Al₂O₃ (as a precursor) were well mixed, where Li/Me ratio was 1.10 (where Me represents Ni and M elements contained in the precursor). Mixture was then roasted in an oxygen furnace at 780 °C for 10 h at a heating-up rate of 1 °C/min. After the roasting was finished, product was cooled with the furnace, and was pulverized and sieved to render an inner core material Li_{1.040}Ni_{0.94}Mn_{0.04}Co_{0.01}Al_{0.01}O₂.

S2. Preparation of mixed slurry: 1000 g of the above inner core material was thoroughly mixed well with 3 g of reaction medium V₂O₅, where V₂O₅ elementary particles used had an average particle size D50 of 120 nm and a specific surface area of 22.8 m²/g. Mixture was then added into 1000 g of a LiPF₆-containing dimethyl carbonate solution, where LiPF₆ concentration was 15 wt%, and stirred well, where a water content of the dimethyl carbonate solution was 229 ppm. Then aging was performed under a condition of 60 °C for 10 h to render the mixed slurry.

S3. Preparation of coated cathode material: Suction filtration was performed on the above mixed slurry. A filter cake was dried in a vacuum vibration dryer at a drying temperature of 180 °C for 5 h. After cooling, material was sieved by a 325-mesh sieve, so as to render the coated cathode material.

### Comparative Example 1

Comparative Example 1 was different from Example 1 in that: the inner core material Li_{1.022}Ni_{0.812}Mn_{0.119}Co_{0.050}Ti_{0.006}Zr_{0.004}O₂ prepared in step S1 was washed with water for 1 min to reduce free lithium carbonate and free lithium hydroxide, where a solid content was 50 wt%. Water-washed material was then dried at 150 °C for 4 h to render a high-nickel cathode material inner core Li_{1.022}Ni_{0.812}Mn_{0.119}Co_{0.059}Ti_{0.005}Zr_{0.005}O₂. Then subsequent treatments of S2 and S3 were performed.

### Comparative Example 2

Comparative Example 2 was different from Example 1 in that the reaction medium Al₂O₃ was not added in step S2.

### Comparative Example 3

Comparative Example 3 was different from Example 1 in that the ethylene carbonate solution in step S2 was free of LiPF₆.

### Comparative Example 4

Comparative Example 4 was different from Example 1 in that an ethylene carbonate solvent in step S2 was changed into an anhydrous ethanol solvent.

### Comparative Example 5

Comparative Example 5 was different from Example 1 in that a water content of the ethylene carbonate solution in step S2 was 800 ppm.

It should be noted that, in various examples and comparative examples above, physicochemical characterizations at least including the following were further performed:
average particle size D50, specific surface area, free LiOH content, free Li₂CO₃ content, and water content of the inner core; thickness of the coating layer, percentage of mass of the ether oligomer in the coating layer in the mass of the inner core, percentage of mass of lithium salt LiPO₂F₂ in the coating layer in the mass of the inner core, percentage of mass of the metal fluoride in the coating layer in the mass of the inner core, average particle size D50 of the coated cathode material, free LiOH content and free Li₂CO₃ content in the coated cathode material, water content in the coated cathode material, and morphology of the coated cathode material, with results as shown in TABLE 1 and TABLE 2.

It should be noted that testing methods for the physicochemical characterizations performed in various examples and comparative examples above are as follows.
(1) Morphology characterization: observing morphology of samples using a scanning electron microscope (SEM); preparing ultrathin sample pieces by cutting with a focused ion beam (FIB), and testing a thickness of a surface coating layer through a high-resolution transmission electron microscope (HRTEM).
(2) Testing method for the average particle size D50: testing particle size volume distribution of various samples using a particle size analyzer, so as to obtain the average particle size D50; and before performing particle size analysis test, first performing wet ultrasonic treatment on the samples for 60 s, with ultrasonic power of 20 W.
(3) Testing method for the specific surface area: measuring the specific surface areas of various samples using a nitrogen low-temperature adsorption method by a specific surface area tester.
(4) Testing LiOH and Li₂CO₃ contents: referring to GB/T 41704-2022.
(5) Testing trace water: measuring water contents of the coated cathode material, the inner core and the carbonate solution material by Karl Fischer coulometric titration.
(6) ICP test: dissolving the cathode material samples with HCl, formulating a solution with certain concentration, testing contents of metal elements in the material and P and F contents in the coated high-nickel cathode material by an inductively coupled plasma atomic emission spectrometry, and calculating and obtaining the contents of LiPO₂F₂ and metal fluoride in the coating layers.
(7) Measuring ether oligomer content: using an organic element analysis method, decomposing the ether oligomer in the high-nickel composite cathode material at a high temperature in a pure oxygen environment, and measuring contents of carbon, hydrogen and oxygen elements, so as to obtain the content of corresponding ether oligomer.
(8) Functional group characterization for oligomer: using a German Bruker Autoflex MALDI-TOF-MS mass spectrometer for testing, to obtain MALDI-TOF-MS spectrum of functional group, where the method included: dissolving a test sample and 2,5-dihydroxybenzoic acid (DHB) bulk in an acetonitrile solvent, where sample concentration was about 10⁻⁶ mol/L, and recording positive ions, where a test range was 150-3,000 Da. Polymerization units and degree of polymerization were calculated through MALDI-TOF-MS spectrum.

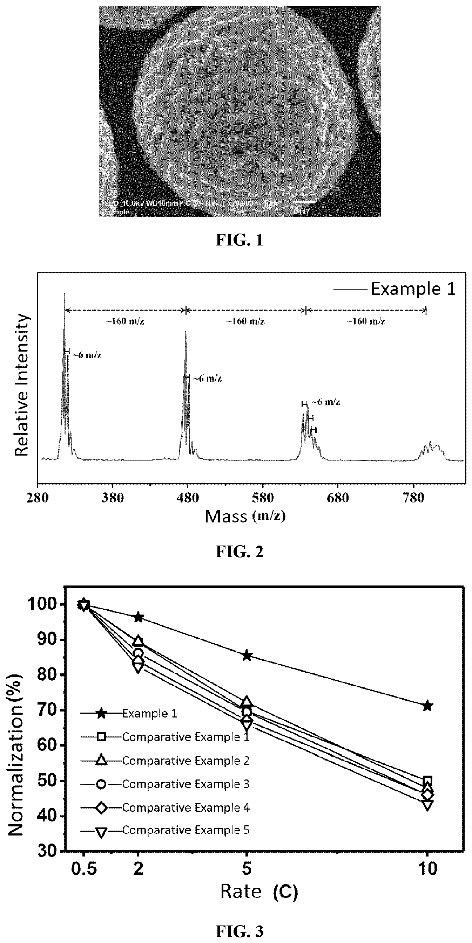

A scanning electron microscopic result of the coated cathode material prepared in Example 1 is as shown in FIG. 1. It can be seen from FIG. 1 that the coated cathode material prepared in Example 1 is secondary particles formed by agglomeration of primary particles of about 400 nm, the particle size is about 9.0 µm, the surface of the material has an obvious coating layer, and about 30 nm lithium salt LiPO₂F₂ and metal fluoride particles are embedded.

Results of the oligomer functional group characterization of the coated cathode material prepared in Example 1 are as shown in FIG. 2. It can be seen from FIG. 2 that an interval m/z between adjacent peak groups in the spectrum is about 160, and the degree of polymerization is 4. Such regular repeating pattern is mainly caused by cleavage of regular sites of monomers in the polymer, and in conjunction with reaction mechanism, it can be inferred that the copolymer contains -(CH₂-CH₂-O)₃-CH₂-O- group, belonging to ether oligomers. In addition, the interval m/z between adjacent peaks in each peak group is about 6, mainly because H at an end of the polymer is substituted by Li⁺, and the oligomer coating layer obtained on the surface is a lithium-containing ether oligomer.

Physicochemical characterization results of various examples above are shown in TABLE 1.

**TABLE 1**

| | | Example 1 | Example 2 | Example 3 | Example 4 | Example 5 | Example 6 |
|---|---|---|---|---|---|---|---|
| Inner core | D50 (µm) | 10.25 | 14.68 | 12.51 | 3.35 | 3.52 | 10.68 |
| | Specific surface area (m²/g) | 0.65 | 0.71 | 0.68 | 0.82 | 0.97 | 0.71 |
| | Free LiOH content (ppm) | 4436 | 9225 | 3280 | 8776 | 6360 | 4649 |
| | Free Li₂CO₃ content (ppm) | 3835 | 6095 | 2226 | 8824 | 6458 | 5327 |
| | H₂O (ppm) | 323 | 298 | 216 | 484 | 332 | 381 |
| Ether oligomer coating layer | Thickness (nm) | 55 | 185 | 5 | 155 | 63 | 76 |
| | Weight ratio (wt.%) | 1.36 | 2.95 | 0.12 | 2.73 | 1.21 | 0.45 |
| | Degree of polymerization | 4 | 5 | 2 | 5 | 4 | 3 |
| LiPO₂F₂ lithium salt | Weight ratio (wt.%) | 1.73 | 2.84 | 0.10 | 2.61 | 1.38 | 0.96 |
| Metal fluoride | Weight ratio (wt.%) | 0.98 | 2.90 | 0.22 | 2.41 | 1.63 | 1.75 |
| Coated cathode material | D50 (µm) | 10.44 | 15.08 | 12.78 | 3.42 | 3.75 | 11.36 |
| | Specific surface area (m²/g) | 0.82 | 0.44 | 0.78 | 1.02 | 0.94 | 0.89 |
| | Free LiOH content (ppm) | 1744 | 2513 | 2157 | 2771 | 2054 | 2524 |
| | Free Li₂CO₃ content (ppm) | 1129 | 2193 | 2018 | 2520 | 1580 | 2073 |
| | H₂O (ppm) | 196 | 225 | 263 | 230 | 24 | 181 |

Physicochemical characterization results of various comparative examples above are shown in TABLE 2.

**TABLE 2**

| | | Comparative Example 1 | Comparative Example 2 | Comparative Example 3 | Comparative Example 4 | Comparative Example 5 |
|---|---|---|---|---|---|---|
| Inner core | D50 (µm) | 10.50 | 10.25 | 10.25 | 10.25 | 10.25 |
| | Specific surface area (m²/g) | 0.98 | 0.65 | 0.65 | 0.65 | 0.65 |
| | Free LiOH content (ppm) | 972 | 4436 | 4436 | 4436 | 4436 |
| | Free Li₂CO₃ content (ppm) | 824 | 3835 | 3835 | 3835 | 3835 |
| | H₂O (ppm) | 473 | 323 | 323 | 323 | 323 |
| Oligomer coating layer | Thickness (nm) | - | 46 | 40 | - | 75 |
| | Weight ratio (wt.%) | - | 1.25 | 1.11 | - | 0.85 |
| | Degree of polymerization | - | 4 | 4 | - | - |
| LiPO₂F₂ lithium salt | Weight ratio (wt.%) | 0.62 | - | - | 0.25 | - |
| Metal fluoride | Weight ratio (wt.%) | 0.55 | - | - | 0.12 | 3.43 |
| Coated high-nickel cathode material | D50 (µm) | 11.14 | 10.49 | 10.74 | 10.65 | 10.14 |
| | Specific surface area (m²/g) | 0.83 | 0.78 | 0.88 | 0.82 | 0.88 |
| | Free LiOH content (ppm) | 1093 | 1639 | 1587 | 1901 | 1744 |
| | Free Li₂CO₃ content (ppm) | 972 | 1039 | 1095 | 1106 | 1050 |
| | H₂O (ppm) | 394 | 194 | 192 | 186 | 182 |

It can be seen from the results in TABLE 1 and TABLE 2 that, in Comparative Example 1, as the inner core material was washed with water, surface residual lithium compounds were reduced, and cleavage of carbonate bonds of the surface cannot be induced to form a copolymer coating layer. Comparative Example 2, without addition of the reaction medium, and Comparative Example 3, without addition of LiPF₆, cannot react in situ to form the lithium salt LiPO₂F₂ or the metal fluoride. In Comparative Example 4, the carbonate solvent was changed into anhydrous ethanol, copolymerization reaction cannot occur, and no oligomer coating layer is generated. In Comparative Example 5, the carbonate solution has excessive water, copolymerization process is affected, side reactions occur, polymerization effect is poor, and excessive water causes hydrolysis of the LiPF₆ solute to generate HF, so that the metal fluoride content in the material surface is high.

### II. Preparation of secondary battery

Electrochemical performances of the materials in the above examples and comparative examples were tested through button battery and pouch battery.

A specific method for manufacturing the button battery and a cathode plate thereof was as follows: mixing powder of the prepared cathode material with acetylene black and polyvinylidene fluoride in a mass ratio of 96:2:2, adding a proper amount of N-methylpyrrolidone as a dispersing agent, and grinding into a slurry; and then uniformly coating the slurry on a surface of a single side of an aluminum foil, vacuum drying at 120 °C for 12 h, rolling the dried electrode plate using a rolling machine, cutting the aluminum foil by a slicing machine to obtain a circular electrode plate with a diameter of 10 mm, with a loading capacity of an active material controlled at about 12 mg/cm²; assembling a half-battery in a glove box having an argon atmosphere, with a water partial pressure ≤0.1 ppm, and an oxygen partial pressure ≤0. 1 ppm; and using metal lithium as a counter electrode, and 1 M LiPF₆ (EC/DMC, in a volume ratio of 1:1) solution as an electrolytic solution, to assemble a button battery with a specification being CR2032.

A specific method for manufacturing a pouch battery and a cathode plate thereof was as follows: mixing powder of the prepared cathode material with acetylene black and polyvinylidene fluoride in a mass ratio of 96:2:2, adding a proper amount of N-methylpyrrolidone as a dispersing agent, and grinding into a slurry; and then uniformly coating the slurry on two surfaces of two sides of an aluminum foil, vacuum drying at 120 °C for 12 h; forming an anode from graphite (MCMB), Super-P, CMC and styrene-butadiene rubber, in a weight ratio of 94:2:2:2, where average loading densities of the cathode and the anode were about 20 mg cm⁻² and 13 mg cm⁻² respectively, a design capacity of the battery was about 1 Ah; and a capacity balance N/P ratio of the cathode and the anode was set at about 1.10.

### III. Performance tests

1. Testing method for first-cycle charge/discharge specific capacity and rate performance: charging and discharging the button battery under a condition of room temperature using a constant-current charging and discharging mode, where a voltage range was 2.8-4.25 V, and a current density was 40 mA/g, i.e., 0.2 C rate. The rate performance of the button battery was tested using current densities of 0.5 C, 2 C, 5 C and 10 C.

2. Testing method for lithium ion diffusion coefficient: testing and comparing lithium ion diffusion coefficients of button batteries of different materials by means of electrochemical impedance EIS, where a frequency range of the test was 100 kHz-0.01 Hz, and amplitude was 10 mV.

3. Test of capacity retention rate and direct current internal resistance (DCR): performing a charging and discharging cycle test on the pouch battery under a condition of 45 °C using a constant-current charging and discharging mode, where a voltage range was 2.8-4.2 V, a current density was 100 mA/g, and capacity retention rate after 200 cycles = (100-cycle discharge specific capacity/first-cycle discharge specific capacity) × 100%. The direct current internal resistance test used HPPC method in FreedomCAR project "Battery Test Manual for Power-Assist Hybrid Electric Vehicles", to test the direct current internal resistance in 50% SOC state during discharging. Direct current internal resistance increase after 200 cycles = (200-cycle DCR - first-cycle DCR)/first-cycle DCR × 100%.

Test results of first-cycle charge/discharge specific capacities and test results of lithium ion diffusion coefficients of various button batteries prepared above, as well as test results of capacity retention rates and test results of direct current internal resistance of various pouch batteries prepared above are as shown in TABLE 3.

**TABLE 3**

| Group | First-cycle charge specific capacity (mAh/g) | First-cycle discharge specific capacity (mAh/g) | First-cycle Coulombic efficiency (%) | Capacity retention rate after 200 cycles (%) | DCR increase after 200 cycles (%) | Lithium ion diffusion coefficient (cm²/s) |
|---|---|---|---|---|---|---|
| Example 1 | 240.5 | 210.7 | 87.6 | 92.2 | 44.1% | 5.6×10⁻¹¹ |
| Example 2 | 239.5 | 218.9 | 91.4 | 91.5 | 49.4% | 6.6×10⁻¹¹ |
| Example 3 | 243.9 | 215.1 | 88.2 | 89.0 | 38.4% | 7.6×10⁻¹¹ |
| Example 4 | 239.0 | 220.4 | 92.2 | 90.4 | 38.0% | 1.7×10⁻¹⁰ |
| Example 5 | 236.7 | 215.4 | 91.0 | 91.7 | 39.0% | 1.6×10⁻¹⁰ |
| Example 6 | 254.7 | 228.0 | 89.5 | 90.0 | 43.7% | 5.8×10⁻¹¹ |
| Comparative Example 1 | 239.1 | 193.7 | 81.0 | 64.7 | 93.8% | 3.9×10⁻¹⁴ |
| Comparative Example 2 | 235.9 | 188.5 | 79.9 | 66.5 | 95.3% | 2.1×10⁻¹³ |
| Comparative Example 3 | 224.0 | 173.4 | 77.4 | 61.1 | 107.7% | 9.1×10⁻¹⁴ |
| Comparative Example 4 | 225.5 | 183.8 | 81.5 | 60.4 | 111.2% | 5.5×10⁻¹⁴ |
| Comparative Example 5 | 246.0 | 187.2 | 76.1 | 62.0 | 105.9% | 4.9×10⁻¹⁴ |

The test results of the rate performance of various button batteries prepared above are AS shown in TABLE 4. The test results of the rate performance of Example 1 and Comparative Examples 1-5 are shown in TABLE 3.

**TABLE 4**

| Group | 0.5 C discharge specific capacity (mAh/g) | 2 C discharge specific capacity (mAh/g) | 5 C discharge specific capacity (mAh/g) | 10 C discharge specific capacity (mAh/g) |
|---|---|---|---|---|
| Example 1 | 209.4 | 201.8 | 179.2 | 149.2 |
| Example 2 | 214.8 | 206.2 | 181.0 | 157.2 |
| Example 3 | 210.4 | 203.0 | 187.7 | 152.4 |
| Example 4 | 217.6 | 209.5 | 194.5 | 168.5 |
| Example 5 | 211.2 | 201.2 | 183.6 | 151.5 |
| Example 6 | 223.4 | 216.6 | 197.0 | 164.4 |
| Comparative Example 1 | 188.3 | 168.1 | 131.4 | 94.3 |
| Comparative Example 2 | 185.5 | 165.9 | 134.0 | 89.0 |
| Comparative Example 3 | 168.7 | 145.4 | 117.3 | 77.7 |
| Comparative Example 4 | 181.2 | 152.0 | 121.6 | 83.6 |
| Comparative Example 5 | 183.3 | 151.0 | 120.9 | 79.7 |

It can be seen from TABLE 3 and TABLE 4 that the cathode materials and cathode plates prepared in Examples 1-6 have higher first-cycle Coulombic efficiency, the capacity retention rate after 200 cycles is remarkably higher than that of comparative samples, and the DCR increase is remarkably lower than that of the comparative samples, exhibiting more excellent interface stability, and indicating that the coated cathode material prepared by the preparation method of the present invention has lower interface impedance, higher first efficiency and more excellent kinetic performance and cycle performance.

It can be seen from the lithium ion diffusion coefficients obtained by the EIS test that the coated cathode material prepared by the preparation method of the present invention has a higher lithium ion diffusion coefficient, and has stronger reaction kinetics.

In addition, it can be seen from FIG. 3 that the rate performance tests at different current densities of 0.5 C to 10 C show that the discharge capacity retention rates (10 C discharge capacity/0.5 C discharge capacity) of the coated cathode materials at a high rate of 10 C in Examples 1-6 are all 70% or above, which is far higher than the discharge capacity retention rates (10 C discharge capacity/0.5 C discharge capacity) of the cathode materials at a high rate of 10 C in the comparative examples, indicating that the coated cathode material prepared by the preparation method of the present invention has more excellent rate performance.

Various technical features of the above examples can be combined arbitrarily. In order to make the description concise, not all possible combinations of the technical features in the above examples are described. However, combinations of these technical features, as long as there is no contradiction therebetween, should be all considered as falling within the scope of the present specification.

The above examples are merely several embodiments of the present invention, of which the description is relatively specific and detailed, but they should not be thus construed as limitation to the patent scope of the present invention. It should be indicated that the ordinarily skilled in the art further could make several modifications and improvements without departing from the concept of the present invention, all of which fall within the scope of protection of the present invention. Therefore, the scope of protection of the present patent for invention should be based on the claims attached.

## Claims

1. A coated cathode material, comprising:
an inner core, wherein the inner core contains a lithium nickel oxide; and
a coating layer, coated on at least part of an outer surface of the inner core, wherein the coating layer contains a lithium-containing amorphous polymer, and LiPO₂F₂ and metal fluoride are distributed in the lithium-containing amorphous polymer.

2. The coated cathode material according to claim 1, wherein the lithium-containing amorphous polymer comprises a lithium-containing ether oligomer;
optionally, the lithium-containing ether oligomer has at least one of following characteristics:
(1) the lithium-containing ether oligomer comprises an ether oligomer with a terminal group containing lithium;
(2) a repeating unit of the lithium-containing ether oligomer comprises one or more of -CH₂-O-, -CH₂-CH₂-O-, and -CH₂-CH₂-CH₂-O-;
(3) a mass of the lithium-containing ether oligomer accounts for 0.05%-3% of a mass of the inner core; and
(4) a degree of polymerization of the lithium-containing ether oligomer is an integer between 1 and 10.

3. The coated cathode material according to claim 1, wherein the LiPO₂F₂ has at least one of following characteristics:
(1) an average particle size D50 of the LiPO₂F₂ is 1 nm-100 nm; and
(2) a mass of the LiPO₂F₂ accounts for 0.01%-3% of a mass of the inner core.

4. The coated cathode material according to claim 1, wherein the metal fluoride has at least one of following characteristics:
(1) a metal element contained in the metal fluoride comprises one or more of Li, Mg, Zn, Al, Zr, Ti, Nb, V, Mo and W;
(2) an average particle size D50 of the metal fluoride is 1 nm-100 nm; and
(3) a mass of the metal fluoride accounts for 0.05%-3% of a mass of the inner core.

5. The coated cathode material according to any one of claims 1 to 4, wherein in the lithium nickel oxide, a molar ratio of nickel element in a total of metal elements except lithium element is 0.6-1;
optionally, a chemical formula of the lithium nickel oxide is LiₐNi_{b}M_{1-b}O₂, wherein M element is a metal element, 0.9≤a≤1.1, and 0.6<b<1; and
further optionally, the M element comprises one or more of Mn, Co, Al, Mg, Sr, B, Ti, Zr, Nb, Ta and W.

6. The coated cathode material according to any one of claims 1 to 4, wherein the coated cathode material has at least one of following characteristics:
(1) a thickness of the coating layer is 2 nm-200 nm;
(2) an average particle size D50 of the coated cathode material is 2 µm-18 µm;
(3) a specific surface area of the coated cathode material is 0.3 m²/g-3.0 m²/g;
(4) a water content of the coated cathode material is <500 ppm; and
(5) the coated cathode material contains one or more of free LiOH and free Li₂CO₃;
optionally, a content of the free LiOH in the coated cathode material is 1,500 ppm-4,000 ppm; and
optionally, a content of the free Li₂CO₃ in the coated cathode material is 1,500 ppm-4,000 ppm.

7. A preparation method for the coated cathode material according to any one of claims 1 to 6, comprising steps of:
mixing the inner core, a reaction medium and a LiPF₆-containing carbonate solution, and then performing an aging reaction so as to form the coating layer on at least part of an outer surface of the inner core, thus rendering the coated cathode material, wherein the inner core contains at least one of free LiOH and free Li₂CO₃,
wherein the reaction medium comprises a metal oxide; and a water content of the carbonate solution is <500 ppm.

8. The preparation method for the coated cathode material according to claim 7, wherein the preparation method for the coated cathode material comprises at least one of following conditions:
(1) a content of the free LiOH in the inner core is 2,000 ppm-10,000 ppm;
(2) a content of the free Li₂CO₃ in the inner core is 2,000 ppm-10,000 ppm;
(3) a water content of the inner core is <500 ppm;
(4) a metal element contained in the metal oxide comprises one or more of Mg, Zn, Al, Zr, Ti, Nb, V, Mo and W;
(5) a mass ratio of the inner core to the reaction medium is 1:(0.0005-0.03);
(6) a specific surface area of the reaction medium is 10 m²/g-100 m²/g;
(7) the reaction medium comprises elementary particles having an average particle size D50 of 1 nm-500 nm;
(8) a mass percentage concentration of the LiPF₆ in the carbonate solution is 5%-20%;
(9) a carbonate solvent contained in the carbonate solution comprises one or more of ethylene carbonate, propylene carbonate, dimethyl carbonate, diethyl carbonate and ethyl methyl carbonate;
(10) a temperature of the aging reaction is 20 °C-80 °C; and a duration of the aging reaction is 6 h-30 h; and
(11) a solid content of a slurry after mixing the inner core, the reaction medium and the carbonate solution is 10%-80%.

9. A cathode plate, comprising the coated cathode material according to any one of claims 1 to 6 or the coated cathode material prepared using the method according to any one of claims 7 to 8.

10. A secondary battery, comprising the cathode plate according to claim 9.
